# EUROPEAN PATENT APPLICATION

(11) **EP 3 093 961 A2**
(43) Date of publication of application: **16.11.2016**
(21) Application number: 16159644.0
(22) Date of filing: 10.03.2016
(51) Int. Cl.: H02K 3/18, H02K 15/04

(54) **WINDINGS FOR ELECTRICAL MACHINES**

(30) Priority: 19.03.2015 GB 201504619
(71) Applicant: Nidec SR Drives Ltd., Harrogate North Yorkshire HG3 1PR (GB)
(72) Inventor: Dickinson, Phillip George, Harrogate, Yorkshire HG3 2NX (GB)
(74) Representative: Korenberg, Alexander Tal

(57) **Abstract**

A coil for an electrical machine is wound from a foil conductor. The foil is initially wound on a former with the thickness of the foil extending away from the former. The coil is subsequently transferred to a bending tool and the sides of the coil are manipulated so as to turn the coil sides through approximately 90 degrees. After assembly to the stator of the electrical machine, the coil exhibits excellent heat transfer for the losses in the coil, enabling cool running of the winding or increased rating for the machine.

## Description

This invention relates to the coils used to form windings in electrical machines, particularly those machines in which a coil does not overlap an adjacent coil.

Electrical machines make use of flux flowing in a magnetic circuit to convert energy from one form to another. Rotating electrical machines convert electrical energy to mechanical energy when acting as a motor, and mechanical energy to electrical energy when acting as a generator. All of these machines require electrical windings which carry either excitation or load current. These windings are typically composed of one or more coils of conducting wire (eg copper or aluminium) which is coated with insulating enamel to provide electrical insulation between adjacent turns of the coil.

Because of the wide variety of machines in existence, many different types of windings are required and different techniques are required for the satisfactory manufacture of the differing shapes of coils. For relatively small machines, round wire is normally used and, because production volumes are often high, automated methods are known for producing the required coils. Typically these coils have large numbers of turns, eg 100 turns or more, and the wire is relatively fine, eg, less than 0.5mm in diameter, so the coils are "random" or "mush" wound, ie the position of any one turn is not defined within the coil. Sometimes these coils are wound directly into the machine, i.e., "in situ" winding.

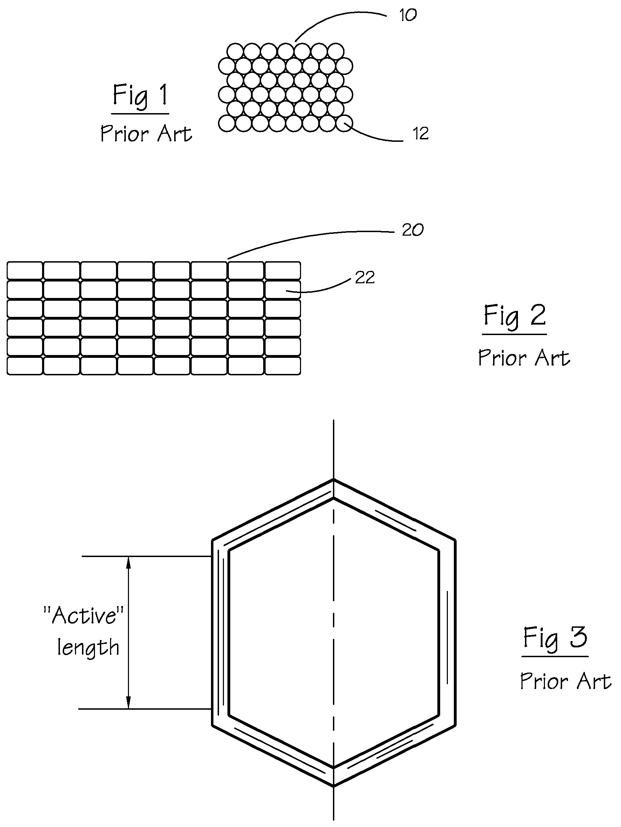

As the machine size increases or the supply voltage falls, the number of turns required falls and the wire cross-section has to increase to carry the larger currents required. This leads to the adoption of a "layered" winding, where the position of each turn in the coil is controlled to give the highest possible amount of conductor in a given cross-sectional area. Figure 1 shows a cross section of such a coil 10 where the individual turns 12 are arranged in a "hexagonal packing" format. This construction is typically adopted for wire diameters between 1 and 5mm.

However, for larger machines, which generally require yet fewer turns in the coil, the best use of the available space requires the use of rectangular section wire. Such wire, while capable of yielding very high density of wire in a given space, is much more difficult to wind and normally involves a labour intensive process. A cross-section of a coil 20 wound with rectangular strip wire 22 to give a close-packed format is shown in Figure 2.

The required profile of the coil is very dependent on the type of electrical machine. In machines which employ a rotating wave of magneto-motive force (mmf), a "distributed" winding is typically employed, in which each coil spans several slots in the stator and therefore overlaps one or more adjacent coils. In order to accommodate the coil end winding or overhang (defined as the portion of the coil outside the active length of the stator core), a diamond shape is often used, as illustrated in Figure 3. Such coils and their methods of production are discussed in many textbooks, eg "The Performance and Design of Alternating Current Machines", M G Say, Third Edition published by Pitman in 1958.

In other types of machines, a coil only spans a single tooth or pole. These machines typically have salient stator poles and often have parallel sided poles, so it is conventional to wind the coils on a former and subsequently mount the coil on the pole with a suitable insulation system between the pole and the coil. Such coils are found, for example, in the field windings of DC machines and in switched reluctance machines. The coils for these machines are typically characterised by having a "narrow" profile, i.e. the width of the coil at right angles to the pole on which it is assembled is a fraction of the overall length of the coil in the direction of the slot accommodating the coil, typically 0.1 to 0.6. Figure 3 illustrates the magnetically "active" length of the coil, i.e., the extent of the coil length in between stator poles or teeth.

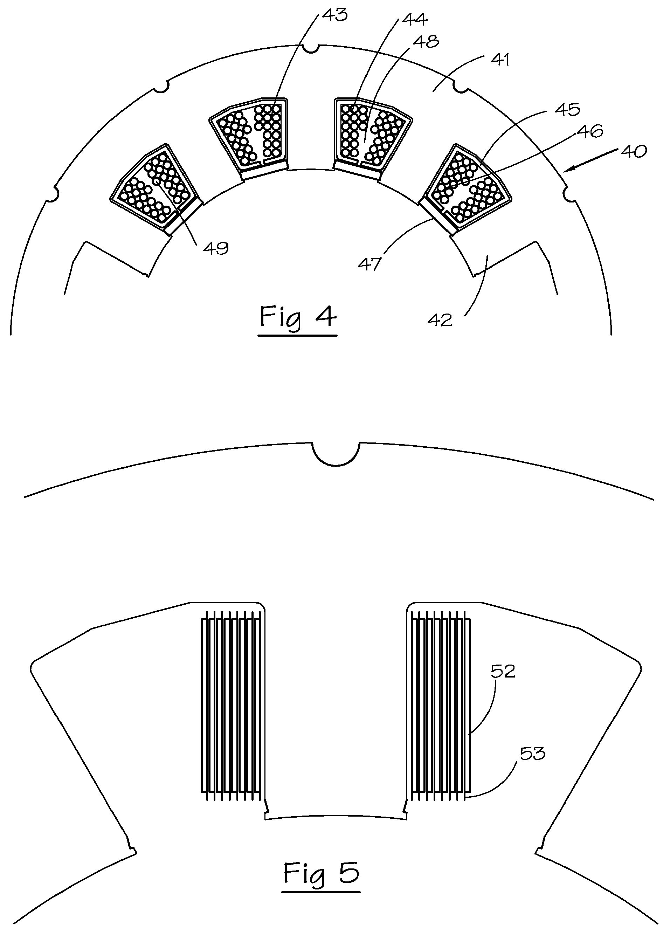

Figure 4 shows a cross-section of a typical stator for a switched reluctance machine. The stator core 40 is typically built up by stacking laminations of the desired profile. The core has an annular outer part 41, often called "the back-iron", from which stator poles 42 extend radially inwards. The poles carry coils 46 which are typically connected in diametrically opposite pairs to form phase windings. The number of poles and the number of phases are parameters which the designer selects to best meet the specification for the machine.

The slots which are formed between the poles are lined with insulation of some sort. Commonly a slot liner 45 made from a sheet of insulating material is used. The coils are typically wound on a former then transferred to the stator and placed over the slot liners. The coil surrounding one pole is sometimes described as having two "coil sides" 43, 44 and two coil end windings (not shown in this cross-section) which join the coil sides together at the axial ends of the stator. The liners are often folded over the coil sides of adjacent coils in the same slot and secured in place by closing pieces 47, sometimes known as "slot wedges" or "top sticks".

With the type of construction shown in Figure 4, it is usual to restrict the dimension of the coil at right angles to the pole side to half the gap between the pole sides at their innermost ends. This ensures that the coils will all be able to fit into the stator, but results in the void 48 being present in the completed stator. While this void is good for electrical isolation between the coils (and hence phase windings), it generally is a thermal disadvantage since it does not offer a low thermal impedance to remove heat from the coils. Unless the coils are to be directly cooled by cooling fluid being passed across the coils themselves, the losses generated in the coils must be extracted to the pole side or the back-iron across the surfaces where the coil touches. It follows that the turns of the coil which are at the furthest from these surfaces have a relatively high thermal impedance between them and the stator core, since the heat has to pass across many layers of insulation (both around the wires themselves and the slot liner) before reaching the stator. As a result, the outermost corner of the coil will typically run much hotter than the rest of the coil, and this is often a limiting feature of the design. There is therefore a need for a coil design which allows losses to be efficiently removed to the stator core and which has a more uniform heat distribution.

The present invention is defined in the accompanying independent claims. Preferred features are recited in the dependent claims.

Aspects of the invention are set out in the accompanying independent claims.

In some embodiments, a coil for an electrical machine having a stator with salient poles is wound from a conductor to form a space for accepting a salient pole of the electrical machine. The conductor has a width and a thickness and an aspect ratio of width to thickness greater than 10. The width of the conductor extends in a direction away from the space in a portion of the coil.

In some embodiments, the width of the conductor extends in a respective direction away from the space in a respective portion of the coil on each of two opposed sides of the space. The respective directions may be perpendicular to a plane bisecting the space between the respective portions of the coil.

In some embodiments, a coil for an electrical machine having a stator with salient poles is wound from a conductor having a width and thickness perpendicular to a length of the conductor and an aspect ratio of width to thickness greater than 10. The coil is formed to have coil sides joined by a respective end portion at each end. The coil sides are twisted relative to the end portion. The coil side may be twisted through substantially 90° relative to the end portions.

In some embodiments, there is provided an electrical machine having a stator with salient poles. The salient poles have pole sides with the pole sides of adjacent poles being disposed on either side of a slot therebetween. The electrical machine has a coil wound around a salient pole from a conductor having a width and thickness perpendicular to a length of the conductor. An aspect ratio of width to thickness is greater than 10. The width of the conductor extends in the direction away from pole sides of the salient pole in the region of the pole sides. The direction may be substantially perpendicular to the pole sides.

Advantageously, by providing a coil made from a flat, ribbon-like conductor (that is with an aspect ratio of width to thickness that is greater than a certain value, for example greater than 10), heat transmission barriers represented by wire insulation are removed in the direction of the width and therefore efficient heat exchange can happen between the stator and the heat generated elsewhere in the coil, through the width of the conductor forming the coil. Additionally, by orientating the conductor such that its width extends in the direction away from the pole sides, for example in a direction perpendicular to the pole sides, the distance between a free face of the coil and an end of the pole is increased, thereby reducing the occurrence of eddy currents due to fringing fluxes at the ends of the pole faces. This arrangement therefore combines thermal cooling efficiency with efficiency of the resulting magnetic circuit.

In some embodiments, there is provided a method of making a coil for an electrical machine using a conductor as described above. The method comprises winding the conductor on a former to form a coil with the thickness of the conductor extending away from the former. The coil has coil sides joined by a respective end portion at each end. The method comprises bending the coil sides about an axis along a direction from one of the end portions to the other one of the end portions. In some embodiments, the method comprises bending the coil side about the axis through an angle such that the coil sides are substantially co-planer when the operation is completed. The method may comprise bending the coil sides about the axis through an angle greater than 90°.

In any of the above embodiments, the aspect ratio of the conductor may be greater than 40, greater than 50 or greater than 100. The electrical machine may be a switched reluctance machine.

The invention can be put into practice in a number of ways, some of which will now be described by way of example and with reference to the accompanying drawings in which:
Figure 1 shows a cross section of a close-packed coil made from round wire;
Figure 2 shows a cross section of a close-packed coil made from rectangular wire;
Figure 3 shows a typical-diamond shaped coil for a distributed winding;
Figure 4 shows a partial cross-section of a typical stator for a switched reluctance machine;
Figure 5 shows an enlarged portion of a stator with a foil-wound coil on one pole;
Figure 6 shows a foil-wound coil;
Figures 7a and 7b show views from opposite sides of a coil according to an embodiment;
Figures 8a, 8b and 8c show a bending tool suitable for bending the coil sides of the coil of Figure 7; and
Figure 9 shows an enlarged portion of a stator with a foil-wound coil according to one aspect of the invention.

The dissipation of losses from the winding of an electrical machine relies on the existence of a thermal path to a coolant (e.g., air being blown past the outer surface of the coils) or to a cooler surface (e.g., the pole side or back-iron). Figure 4 shows a typical winding for a low-voltage switched reluctance machine and it will be seen that the thermal path from the outermost turn 49 to the stator core is relatively long. If the machine is totally enclosed (i.e., the losses are extracted through the stator core and the frame), then it is common for these parts of the coil farthest from the stator to run significantly hotter than the turns closer to the stator. Calculations show that while the thermal conductivity of copper is 398W/mK, the thermal conductivity of the path made up from both copper wire and the necessary insulation is 0.93W/mK.

One way of exploiting the lower thermal impedance of copper is to wind the coils from foil and place them on the poles as shown in Figure 5, which shows an enlarged portion of a stator. In this context, "foil" is considered to be a conductor whose width to thickness ratio (often called the aspect ratio) exceeds 10. Aspect ratios of 40 or 50 are frequently used in industrial applications. Because of its shape, this material is sometimes known as "ribbon conductor". This particular coil has been wound from copper foil 52 which has a thin sheet of insulation 53 attached to one side of the foil to insulate the individual turns of the coil from each other. The insulation may be one of several known types, e.g. a synthetic polyimide film sold By DuPont under the name Kapton®. It is conventional to make the insulation slightly wider than the width of the foil, so as to avoid any short circuits between turns of the coil at the edges of the foil. The slot insulation has been omitted from this figure for clarity.

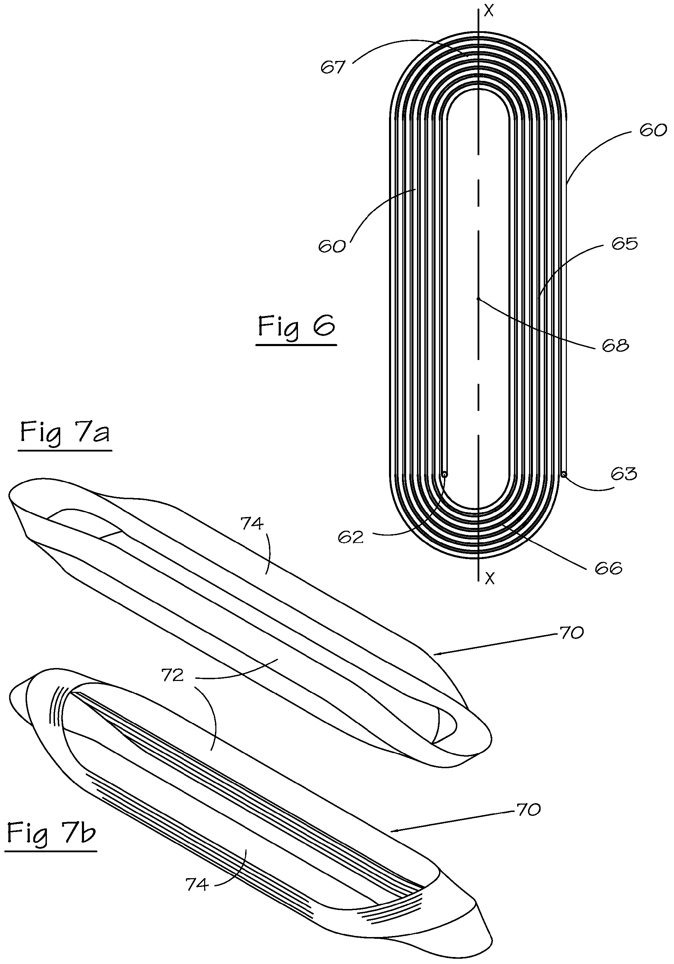

This type of coil has some advantages, particularly in the speed of winding, since the foil coil is one turn per layer, allowing the coil to be wound on a very simple former at high speed without the need to ensure that each turn sits correctly with respect to those on the layer below. Figure 6 shows a coil produced in this way. The foil insulation has been omitted from Figure 6. The foil conductor 60 is wound in a continuous spiral around a former rotating about an axis 68 to produce the shape shown. In the conventional way, the coil has two coil sides 64, 65 which are connected by the end windings 66, 67. The ends of the coil 62, 63 can be terminated in known ways to conventional lead-out wires so that the coils can be connected to form phase windings in the usual way. These coils are particularly attractive for machines supplied at low voltage since they have a relatively small number of turns. An alternative method of production is to wind the coil on a circular former to produce an annular coil then form the coil into the "racetrack" shape shown in Figure 6 by simultaneously pressing the coil sides inwards and pulling the end windings outwards.

For the avoidance of doubt, in a coil as described above with reference to Figure 6, a length of conductor is wound to form the turns of the coil. Only one turn of the coil is present in each layer of the coil. A reference plane XX passes through the axis 68 of the coil and extends in the same direction as the length of the coil. In the areas of the coil sides, the width of the conductor generally lies in planes parallel to XX and the thickness of the conductor extends at right angles to XX. In other words, as the coil is wound, each turn adds to the thickness of the coil, while the width of the coil is determined by the width of the conductor (plus any insulation present).

However, in this type of coil, the orientation of the turns of the coil with respect to the sides of the pole can cause a problem with increased losses. Inspection of Figure 5 shows that the parts of the coil nearest to the airgap of the machine will be prone to eddy currents being generated in the conductor by fringing flux as the rotor pole moves into alignment with the stator pole. The presence of the fringing flux is well documented for switched reluctance machines, see, for example, "Analytical Estimation of the Minimum and Maximum Inductances of a Double-Salient Motor", Corda, J & Stephenson, JM, Proceedings International Conference on Stepping Motors & Systems, Leeds, Sept 1979, pp 50-59, incorporated herein by reference. The eddy currents generated by the flux circulate in the relatively large plane of the foil and cause extra losses in the conductor. For this reason, this type of coil construction is not generally favoured except for low-speed machines where the rate of change of flux is very low.

An attractive solution to this problem would be to turn the foil through 90° and wind the coil "on edge" so that the foil would sit perpendicular to the pole side. However because of the large aspect ratio of the foil, it is impossible to form the foil round the ends of the coil as the foil would buckle or tear as it was forced round the relatively tight bend. In addition, the speed of winding would be very slow, so the original advantage would be lost.

Figures 7a and 7b show two views of a coil according to one embodiment, the views being from opposite sides of the coil. The foil coil 70 has been wound on a former in a similar way to coil 60 to take advantage of the ease and speed of winding. However, before being placed around the pole, the sides of the coil 72, 74 have been manipulated relative to the end windings by clamping them and turning them through 90°. The end winding shape is now much more complex than before, since each layer in the end winding has taken up a new position to cope with the transition of the coil sides through 90°. To aid understanding of the shape, Figure 7b includes an indication of the direction of the foil in the coil sides and end windings.

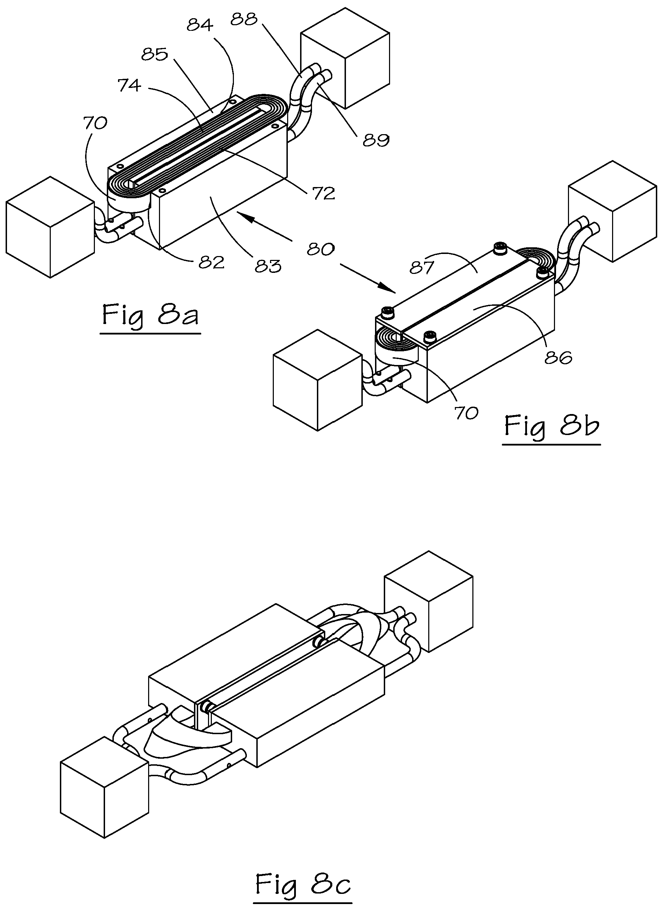

Figures 8a, 8b and 8c show a schematic view of a bending tool which provides one method of manipulating the coil sides. Figure 8a shows the coil 70 placed in the tool 80, with the coil sides 72, 74 received in slots 82, 84. In another version of the tool, the slots are adjustable such that the slot is initially wide to receive the coil in the tool and then the slot is narrowed by a moveable member sliding into place and tightly clamping the coil sides 72, 74. Plates 86, 87 are secured to the top of the tool to hold the upper surface of the coil, as shown in Figure 8b. The two parts of the tool 83, 85 which contain the slots 82, 84 are carried on arms 88, 89 which are able to rotate about an axis. These arms are rotated through a suitable angle to twist the coil sides into the desired plane. Since the copper conductors generally exhibit some hysteresis, it would typically be necessary to twist the coil sides through more than 90° so that they adopt the required position when released from the tool. Figure 8c shows the tool in the position where the coil sides have been twisted through 90°. Those skilled in the art of coil production will appreciate that the bending tool 80 shown is largely schematic and that a practical tool would look different but would still achieve the desired manipulation of the coil sides.

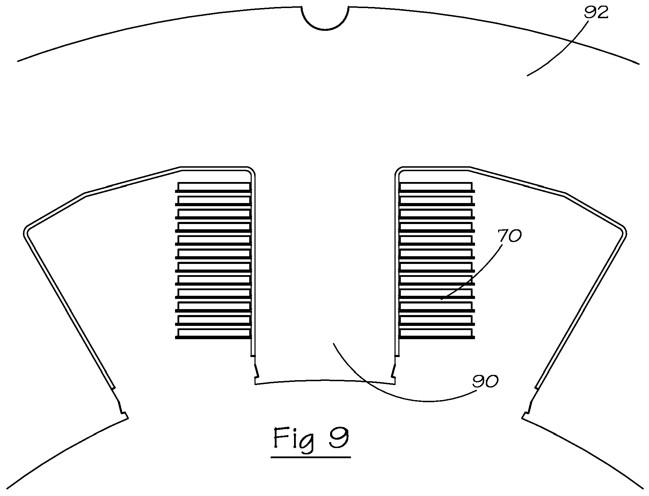

Figure 9 shows a cross-sectional view of the coil 70 assembled to a pole 90 of the stator 92 of a switched reluctance machine. For clarity, clearances have been exaggerated in this figure but in practice the coil would be close-packed and typically would be impregnated after assembly with a polyester or resin varnish to fill all the gaps around the foil. The direction of the width of the foil in the coil sides is at, or closely at, 90° to the pole side and the thickness of the foil is parallel to the pole side. Typically, coils would be assembled to each pole in the stator and connected to form the required number of phase windings.

This arrangement has several benefits. Inspection of Figure 9 shows that the thermal path from any part of the coil to the pole side is predominantly across the width of the foil conductor. This path has a very low thermal impedance, so the heat extraction is good. Further, because of the very tight packing achieved by the foil coil compared to a wire-wound coil, the coil is smaller for a given cross sectional area of conductor. This allows a more compact coil to sit further from the airgap and further reduces eddy current losses.

Figures 7 and 8 show one coil side being rotated clockwise and the other coil side rotated anti-clockwise to produce the final coil shape. It is equally possible to rotate both coil sides in the same direction to produce the finished coil. While with this arrangement the end windings would have a slightly different profile to those shown in Figure 7, the end result is the same for the coil sides, i.e. the coil sides in the finished coil have the width of the foil conductor at right angles to the space provided for the stator pole.

The skilled person will appreciate that variation of the disclosed arrangements are possible without departing from the invention, particularly in the details of the shape of the coil and the bending tool. For example, similar benefits of improved heat conduction and reduced eddy currents may be achieved by other orientations of the coil sides, for example with the width of the foil conductor not extending at or close to 90° to the pole side but at another angle other than 0°, for example an angle of 45° or between 45° and 90°. It will be seen that as long as an edge of the conductor foil is kept in contact with or close to the pole side, the thermal path may remain predominantly across the width of the conductor, while eddy currents due to fringing flux may be reduced as compared to the arrangement of Figures 5 and 6, due to a reduced proximity of the face of the coil to the flux in the airgap.

Accordingly, the above description of several embodiments is made by way of example and not for the purposes of limitation. It will be clear to the skilled person that minor modifications can be made to the coil design and method of production described above. The present invention is intended to be limited only by the scope of the following claims.

## Claims

1. A coil for an electrical machine having a stator with salient poles, the coil being wound from a conductor to form a space for accepting a salient pole of an electrical machine, the conductor having a width and a thickness and an aspect ratio of width to thickness greater than 10 wherein the width of the conductor extends in a direction away from the space in a portion of the coil.

2. A coil as claimed in claim 1, wherein the width of the conductor extends in a respective direction away from the space in a respective portion of the coil on each of two on opposed sides of the space.

3. A coil as claimed in claim 2, wherein the respective directions are perpendicular to a plane bisecting the space between the respective portions of the coil.

4. A coil for an electrical machine having a stator with salient poles, the coil being wound from a conductor having a width and a thickness perpendicular to a length of the conductor and an aspect ratio of width to thickness greater than 10, the coil being formed to have coil sides joined by a respective end portion at each end, wherein the sides are twisted relative to the end portions.

5. A coil as claimed in claim 4, wherein the sides are twisted through substantially 90 degrees relative to the end portions.

6. An electrical machine having a stator with a salient pole and a coil as claimed in any one of claims 1 to 5 around the salient pole.

7. An electrical machine having a stator with salient poles, the salient poles having pole sides, the pole sides of adjacent poles being disposed on either side of a slot therebetween, and a coil wound around a salient pole from a conductor having a width and a thickness perpendicular to a length of the conductor and an aspect ratio of width to thickness greater than 10, wherein the width of the conductor extends in a direction away from pole sides of the salient pole in the region of the pole sides.

8. An electrical machine as claimed in claim 7, wherein the direction is substantially perpendicular to the poles sides.

9. A method of making a coil for an electrical machine using a conductor having a width and a thickness perpendicular to a length of the conductor and an aspect ratio of width to thickness greater than 10, the method comprising:
winding the conductor on a former to form a coil with the thickness of the conductor extending away from the former, the coil having coil sides joined by a respective end portion at each end; and
bending each coil side about an axis along a direction from one of the end portions to the other one of the end portions.

10. A method as claimed in claim 9, the method comprising bending each coil side about the axis through an angle such that the coil sides are substantially co-planar when the bending operation is completed.

11. A method as claimed in claim 9 or claim 10, the method comprising bending each coil side about the axis through an angle greater than 90 degrees.

12. A coil, electrical machine or method as claimed in any preceding claim wherein the aspect ratio is greater than 40.

13. A coil, electrical machine or method as claimed in any preceding claim wherein the aspect ratio is greater than 50.

14. A coil, electrical machine or method as claimed in any preceding claim wherein the aspect ratio is greater than 100.

15. A coil, electrical machine or method as claimed in any preceding claim, wherein the machine is a switched reluctance machine.
